# EUROPÄISCHE PATENTSCHRIFT

(11) **EP 3 303 196 B1**
(45) Veröffentlichungstag und Bekanntmachung des Hinweises auf die Patenterteilung: **01.11.2023**
(21) Anmeldenummer: 16723999.5
(22) Anmeldetag: 12.05.2016
(51) Int. Cl.: B65G 11/20

(54) **TRANSPORTRUTSCHE MIT BREITENVERTEILUNGSVORRICHTUNG**
CONVEYOR CHUTE COMPRISING A WIDTH ADJUSTING MECHANISM
TRANSPORTEUR À CHUTE GRAVITAIRE POURVU D'UN DISPOSITIF DE RÉPARTITION SUR LA LARGEUR

(30) Priorität: 04.06.2015 DE 102015210344
(43) Veröffentlichungstag der Anmeldung: 11.04.2018
(73) Patentinhaber: Körber Supply Chain Logistics GmbH, 78467 Konstanz (DE)
(72) Erfinder: BRAUN, Jürgen, 78333 Stockach-Zizenhausen (DE); HOFMANN, Christoph, 88682 Salem-Neufrach (DE); SCHITTHELM, Oliver, 90425 Nürnberg (DE); VITALINI, Michele, 90475 Nürnberg (DE)
(74) Vertreter: Müller Schupfner & Partner Patent- und Rechtsanwaltspartnerschaft mbB
(86) Internationale Anmeldenummer: PCT/EP2016/060648
(87) Internationale Veröffentlichungsnummer: WO 2016/192945

(56) Entgegenhaltungen:
- EP-A1- 1 947 035
- WO-A1-2010/076821
- WO-A1-2014/012861
- US-A- 3 550 756
- US-A- 5 333 722
- US-A1- 2007 221 471
- US-A1- 2013 192 954

## Beschreibung

Die Erfindung bezieht sich auf das technische Gebiet der Transportrutschen für Güter, beispielsweise für Pakete und Gepäckstücke.

Eine Ausschleusung aus automatisierten Sortierprozessen von Sortieranlagen (Sorter), wie zum Beispiel in Paketsortieranlagen oder Gepäckförder- und Sortiersystemen von Flughäfen, erfolgt oft über Transportrutschen. Transportrutschen sind demzufolge häufig Endstellen eines Sortierprozesses und dienen zugleich als Speicher, so dass die Entnahme nicht augenblicklich im Moment der Ausschleusung erfolgen muss.

WO 2010/076821 A1 offenbart ein Verfahren zum Sammeln von Objekten in einem Förderer, bei welchem mittels einer Barriere in einem Verfahrensschritt eine Reihe von Objekten transversal zu einem Förderpfad geformt wird, und in einem weiteren Verfahrensschritt die Barriere entriegelt und die gesamte Reihe von Objekten entsichert und weitergefördert wird.

Die Zunahme von Online-Bestellungen von Waren hat zu einem beständigen Anstieg des Paket- und Päckchenvolumens geführt, wodurch vorteilhafte Ausgestaltungen von Transportrutschen vor allem in Paketsortieranlagen grosses Potential haben. Wenn eine Verwendung der Transportrutsche als Speicher erforderlich ist, ist eine Ausnutzung der gesamten Rutschlänge und Rutschbreite vorteilhaft. Vor einem Einschleusen in die Transportrutsche weisen die Güter oft hohe Geschwindigkeiten und eine meist nicht mit einer Fallrichtung entlang der Transportrutsche übereinstimmende Bewegungsrichtung auf. Da die Güter beim Einschleusen nicht vollständig abgebremst werden, sammeln sie sich aufgrund ihrer Trägheit auf einer Seite der Transportrutsche, einer Ansammlungsseite, an. Die Ansammlungsseite liegt meist in Bewegungsrichtung der Güter vor dem Einschleusen. Die der Ansammlungsseite gegenüberliegende Seite der Transportrutsche wird somit weniger vollständig zur Speicherung ausgenutzt.

Derzeitiger Stand der Technik ist eine Nutzung von Abweiserblechen an einer Rutschkante auf der Ansammlungsseite, die den Gütern bei einem Abprallen einen Impuls weg von der Ansammlungsseite geben. Alternativ wird die Transportrutsche leicht quer geneigt, um die Schwerkraft auszunutzen. Beide Lösungen führen jedoch nur zu einer leicht verbesserten, jedoch noch lange nicht gleichmässigen Verteilung der Güter entlang der Rutschbreite, so dass eine Lösung weiterhin erforderlich ist.

Der vorliegenden Erfindung liegt daher die Aufgabe zugrunde, eine verbesserte Ausnutzung einer Transportrutsche zur Speicherung von Gütern zu erreichen. Diese Aufgabe wird durch die in den unabhängigen Ansprüchen beschriebenen Lösungen gelöst.

Gemäss der vorliegenden Erfindung wird eine Transportrutsche vorgestellt, die geeignet ist zur Verwendung als Speicher von Gütern, insbesondere von Paketen und Gepäckstücken. Die Transportrutsche umfasst mindestens einen Rutschabschnitt 6, der eine geneigte Rutschfläche aufweist mit einer Fallrichtung entlang der Rutschfläche. Die Transportrutsche weist eine Rutschbreite auf. Der Rutschabschnitt umfasst eine Breitenverteilungsvorrichtung, mit der die Güter über zumindest einen Teil der Rutschbreite verteilbar sind und die somit eine verbesserte Ausnutzung der Transportrutsche zur Speicherung der Güter ermöglicht. Dadurch wird die verbesserte Ausnutzung der Transportrutsche zur Speicherung ermöglicht, ohne ihren Flächenbedarf zu erhöhen. Die Breitenverteilungsvorrichtung umfasst mindestens ein Antriebsmittel zum Transportieren der Güter. Das Antriebsmittel ist so angeordnet, dass das Antriebsmittel eine Transportrichtung aufweist, die nicht mit der Fallrichtung übereinstimmt. Das mindestens eine Antriebsmittel ist auf mehrere Segmente, die entlang der Fallrichtung angeordnet sind, verteilt.

Gemäss einem Ausführungsbeispiel ist die Breitenverteilungsvorrichtung in die Rutschfläche integriert. Dadurch können die Güter die Rutschfläche wie gewohnt passieren.

Gemäss einem weiteren Ausführungsbeispiel überspannt die Breitenverteilungsvorrichtung nicht die gesamte Fläche des Rutschabschnitts, insbesondere nicht die gesamte Breite der Transportrutsche. Dadurch kann eine Ablenkung der Güter von der Fallrichtung in die Transportrichtung gezielt nur in einem bestimmten Bereich des Rutschabschnitts erzielt werden, während Güter in einem anderem Bereich weiterhin in Fallrichtung bewegt werden.

Gemäss einem weiteren Ausführungsbeispiel ist das mindestens eine Antriebsmittel auf mehrere Segmente, die entlang der Rutschbreite versetzt angeordnet sind, verteilt. Dadurch kann eine Ablenkung der Güter gezielt an unterschiedlichen Bereichen entlang der Rutschbreite erzielt werden. Güter unterschiedlicher Abmessungen, unterschiedlicher Geschwindigkeiten erfahren dadurch unterschiedliche Ablenkungen und die Wahrscheinlichkeit ist erhöht, dass Güter auf die zur Verfügung stehende Rutschfläche verteilt werden.

Gemäss einem weiteren Ausführungsbeispiel weisen mehrere Segmente des mindestens einen Antriebsmittels unterschiedliche Transportrichtungen auf. Dadurch kann die zu erzielende Transportrichtung an unterschiedlichen Stellen des Rutschabschnitts variiert werden.

Gemäss einem weiteren Ausführungsbeispiel umfasst die Breitenverteilungsvorrichtung eine Einschleusvorrichtung. Die Einschleusvorrichtung bringt die Güter an unterschiedlichen Positionen entlang der Rutschbreite am oberen Ende des Rutschabschnitts ein. Dadurch wird eine Breitenverteilung der Güter bereits im oberen Bereich des Rutschabschnitts erzielt. Gemäss einem weiteren Ausführungsbeispiel umfasst die Breitenverteilungsvorrichtung eine im oberen Bereich des Rutschabschnitts angeordnete Verteilungsvorrichtung. Die Verteilungsvorrichtung ermöglicht eine Verteilung der Güter auf eine rechte Seite und/ oder linke Seite des Rutschabschnitts. Die Güter werden somit bereits im oberen Bereich des Rutschabschnitts entlang der Rutschbreite verteilt.

Gemäss einem weiteren Ausführungsbeispiel ist das Antriebsmittel ausgestaltet, die Güter aktiv und/ oder über Schwerkraftförderung zu transportieren. Dies ermöglicht einen breiten Einsatz unterschiedlicher Antriebsmittel. Die Schwerkraftförderung nutzt die Gewichtskraft der Güter aus, wodurch eine besonders einfache, energieeffiziente und wartungsarme Konstruktion ermöglicht wird.

Gemäss einem weiteren Ausführungsbeispiel umfasst das Antriebsmittel eine Rollenbahn und/ oder ein Förderband. Dadurch kann je nach Einsatzgebiet der Transportrutsche und/ oder Länge der Segmente des Antriebsmittels das passende Antriebsmittel gewählt werden.

Gemäss der vorliegenden Erfindung wird auch ein Verfahren zum Speichern von Gütern auf einer Transportrutsche gemäß dem Gegenstand des Anspruchs 10 vorgestellt.

Gemäss einem weiteren Ausführungsbeispiel weisen die Güter vor dem Einschleusen eine nicht mit der Fallrichtung übereinstimmende Bewegungsrichtung auf. Dadurch legen die Güter Wege entlang dem Rutschabschnitt zurück, die sowohl von der Bewegungsrichtung, als auch von der Fallrichtung beeinflussbar sind.

Gemäss einem weiteren Ausführungsbeispiel erfolgt eine Ansammlung der Güter auf der Ansammlungsseite aufgrund ihrer Trägheit und ihrer Bewegungsrichtung vor dem Einschleusen. Die Trägheit und/ oder die Bewegungsrichtung der Güter beeinflusst auch den insgesamt entlang des Rutschabschnitts zurückgelegten Weg.

Bevorzugte Ausführungsbeispiele der Erfindung werden nachfolgend anhand der Figuren beispielsweise näher erläutert. Dabei zeigen:
- Figur 1: eine Transportrutsche mit mindestens einem Rutschabschnitt gemäss einem bevorzugten Ausführungsbeispiel der Erfindung;
- Figur 2: eine Variante der in Figur 1 dargestellten Transportrutsche mit einem Weg respektive einem hypothetischen Weg eines Guts bei stattfindender respektive ohne stattfindende Wechselwirkung mit Antriebsmitteln nach einem Einschleusen in einen oberen linken Bereich des Rutschabschnitts;
- Figur 3: eine weitere Variante der in Figur 1 dargestellten Transportrutsche mit Wegen unterschiedlich grosser Güter entlang dem Rutschabschnitt bei einer Anordnung der Antriebsmittel entlang der Fallrichtung und versetzt entlang der Rutschbreite;
- Figur 4: eine weitere Variante der in Figur 1 dargestellten Transportrutsche mit Wegen von Gütern entlang dem Rutschabschnitt bei Wechselwirkung mit jeweils zwei an unterschiedlichen Positionen des Rutschabschnitts angeordneten Antriebsmitteln;
- Figur 5: eine weitere Variante der in Figur 1 dargestellten Transportrutsche mit Wegen von Gütern entlang dem Rutschabschnitt, wobei zwei der Wege durch eine Verteilungsvorrichtung gestaltet werden; und
- Figur 6: eine weitere Variante der in Figur 1 dargestellten Transportrutsche mit Wegen von Gütern entlang dem Rutschabschnitt, wobei die Güter mit einer Einschleusvorrichtung an unterschiedlichen Positionen entlang der Rutschbreite am oberen Ende des Rutschabschnitts eingebracht werden.

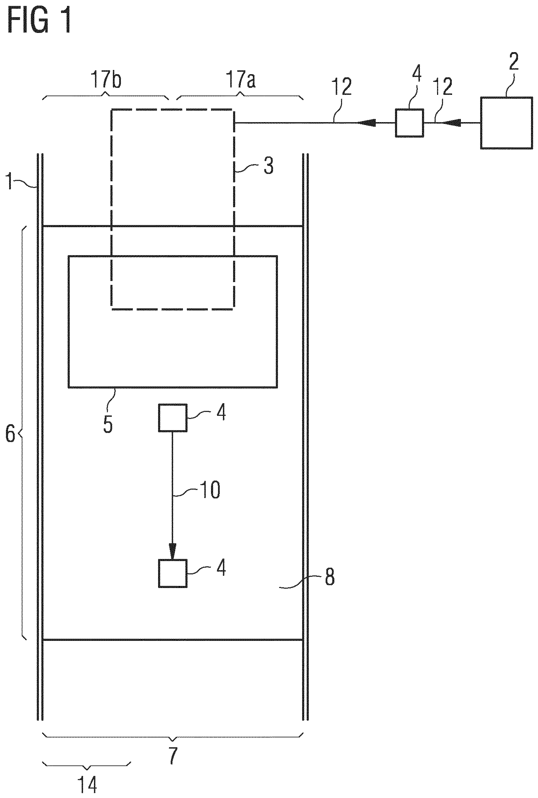

Figur 1 zeigt gemäss einem bevorzugten Ausführungsbeispiel der Erfindung eine Transportrutsche 1, die geeignet ist zur Verwendung als Speicher von Gütern 4, insbesondere von Paketen und Gepäckstücken. Die Transportrutsche 1 umfasst mindestens einen Rutschabschnitt 6. Der Rutschabschnitt 6 weist eine geneigte Rutschfläche 8 auf mit einer Fallrichtung 10 entlang der Rutschfläche 8. Die Transportrutsche 1 weist eine Rutschbreite 7 auf. Der Rutschabschnitt umfasst eine Breitenverteilungsvorrichtung 5, mit der die Güter 4 über zumindest einen Teil der Rutschbreite 7 verteilbar sind. Die Breitenverteilungsvorrichtung 5 ermöglicht somit eine verbesserte Ausnutzung der Transportrutsche 1 zur Speicherung der Güter 4. Die Breitenverteilungsvorrichtung 5 ist in die Rutschfläche 8 integriert. Von einer Sortieranlage 2 kommend weisen die Güter 4 eine Bewegungsrichtung 12 auf, die meist nicht mit der Fallrichtung 10 übereinstimmt. Ein Einschleusen der Güter 3 in die Transportrutsche 1 geschieht mit Hilfe einer Einschleusvorrichtung 3. Da die Güter 4 von der Einschleusvorrichtung 3 nicht notwendigerweise vollständig abgebremst werden, akkumulieren sie sich aufgrund ihrer Trägheit auf einer Ansammlungsseite 14, die in Bewegungsrichtung 12 der Güter 4 vor dem Einschleusen liegt. Wenn sich die Sortieranlage 2 auf der rechten Seite 17a des Rutschabschnitts 6 befindet, liegt die Ansammlungsseite 14 auf der linken Seite 17b des Rutschabschnitts 6. Die Einschleusvorrichtung 3 kann im oberen Bereich oder oberhalb des Rutschabschnitts 6 angeordnet sein.

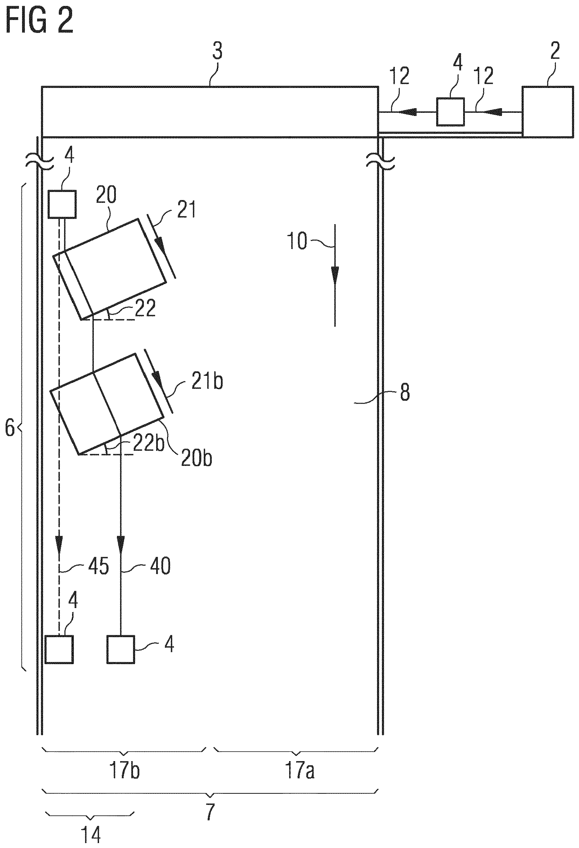

Figur 2 zeigt eine Variante des in Figur 1 dargestellten Rutschabschnitts 6. Die Breitenverteilungsvorrichtung 5 umfasst zwei Antriebsmittel 20 und 20b zum Transportieren der Güter. Die Antriebsmittel 20 und 20b weisen Transportrichtungen 21 und 21b auf, die nicht mit der Fallrichtung 10 über einstimmen. Die Segmente der Antriebsmittel 20, 20b weisen relativ zur Normale der Fallrichtung 10 definierte Anstellwinkel 22, 22b auf, die die Transportrichtungen 21, 21b bestimmen. Das zweite Antriebsmittel 20b ist in einem Segment entlang der Rutschfläche unterhalb von einem Segment des Antriebsmittels 20 angeordnet. Ohne Wechselwirkung mit den Antriebsmitteln 20, 20b würde ein Gut 4 einen hypothetischen Weg 45 unbeeinflusst von dem mindestens einem Antriebsmittel 20 entlang der Rutschfläche 8 zurücklegen. Tatsächlich legt das Gut 4 jedoch einen von den Antriebsmitteln 20 und 20b beeinflussten Weg 40 zurück. Zunächst bewegt sich das Gut 4 in etwa in Fallrichtung 10 und wird durch Wechselwirkung mit dem Antriebsmittel 20 entlang seiner Transportrichtung 21 transportiert. Anschliessend bewegt sich das Gut 4 weiter etwa in Fallrichtung 10, bis es auf das zweite Antriebsmittel 20b trifft, mit diesem wiederum wechselwirkt und somit entlang seiner Transportrichtung 21b transportiert wird. Nach Passieren des zweiten Antriebsmittels 20b bewegt sich das Gut 4 weiter in Fallrichtung 10. Durch die Wechselwirkung mit den Antriebsmitteln 20 und 20b befindet sich das Gut 4 deutlich weiter weg von der Ansammlungsseite 14 als bei Passieren des hypothetischen Wegs 45.

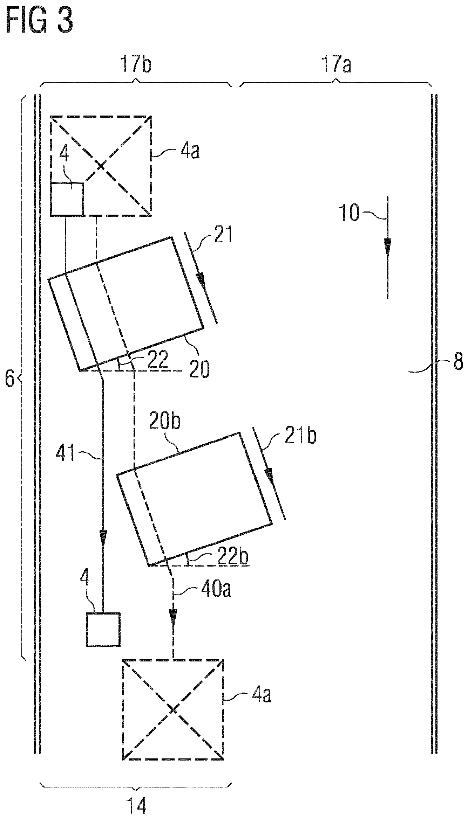

Figur 3 zeigt eine weitere Variante des in Figur 1 dargestellten Rutschabschnitts 6. Die Antriebsmittel 20 und 20b sind entlang der Fallrichtung 10 und versetzt entlang der Rutschbreite 7 angeordnet, wobei sich das Antriebsmittel 20 näher an der Ansammlungsseite 14 befindet. Die Breitenverteilungsvorrichtung 5 überspannt nicht die gesamte Fläche des Rutschabschnitts 6. Insgesamt legt das Gut 4 einen von dem Antriebsmittel 20 beeinflussten Weg 41 zurück und ein grosses Gut 4a legt einen von den Antriebsmitteln 20 und 20b beeinflussten Weg 40a zurück. Beide Güter 4 und 4a befinden sich zunächst im oberen Bereich der Ansammlungsseite 14 und bewegen sich in Fallrichtung 10, passieren das Antriebsmittel 20, werden in seine Transportrichtung 21 abgelenkt und bewegen sich weiter in Fallrichtung 10. Während das Gut 4 aufgrund seiner geringeren Ausmasse auf seinem Weg 41 nicht das zweite Antriebsmittel 20b passiert, wird das grosse Gut 4a auch vom zweiten Antriebsmittel 20b entlang seiner Transportrichtung 21b abgelenkt. Beide Güter 4 und 4a werden von der Ansammlungsseite 14 hin zur rechten Seite 17a transportiert, jedoch nimmt das grosse Gut 4a eine Endposition ein, die sich weiter weg von der Ansammlungsseite 14 befindet als diejenige des grossen Guts 4a.

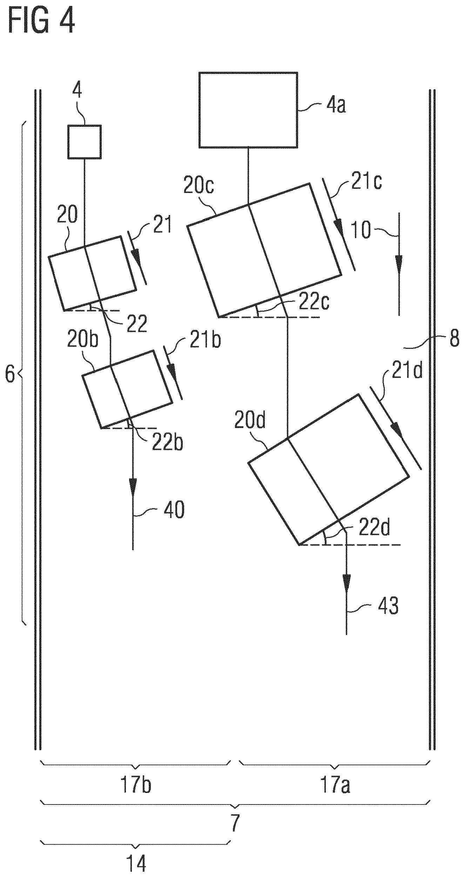

Figur 4 zeigt eine weitere Variante des in Figur 1 dargestellten Rutschabschnitts 6. Die Antriebsmittel 20, 20b, 20c, 20d sind sowohl entlang der Rutschbreite 7, als auch entlang der Fallrichtung 10 angeordnet. Die Antriebsmittel 20 und 20b befinden sich näher an der Ansammlungsseite 14 und weisen eine geringere Breite auf als die Antriebsmittel 20c und 20d. Die Segmente der Antriebsmittel 20, 20b, 20c, 20d weisen unterschiedliche Transportrichtungen 21, 21b, 21c, 21d auf. Analog zur in Figur 3 beschriebenen Situation sammeln sich auf einer linken Seite 17b des Rutschabschnitts 6 aufgrund einer Anordnung entlang der Fallrichtung 10 und versetzt entlang der Rutschbreite 7 bevorzugt kleine Güter 4 an, während sich auf einer rechten Seite 17a bevorzugt grosse Güter 4b ansammeln. Die unterschiedliche Breite der Antriebsmittel 20, 20b und 20c, 20d verstärkt dies noch. Ein kleines Gut 4 legt nach Wechselwirkung mit den Antriebsmitteln 20 und 20b den Weg 40 zurück, während das grosse Gut 4a nach Wechselwirkung mit den Antriebsmitteln 20c und 20d den Weg 43 zurücklegt. Das grosse Gut 4a befindet sich im oberen Bereich des Rutschabschnitts bereits weiter von der Ansammlungsseite 14 entfernt als das kleine Gut 4. Diese Ausgangssituation kann beispielsweise erzielt werden durch einen oberhalb des Rutschabschnitts 6 angeordneten Rutschabschnitt 6 wie in Figur 3 dargestellt.

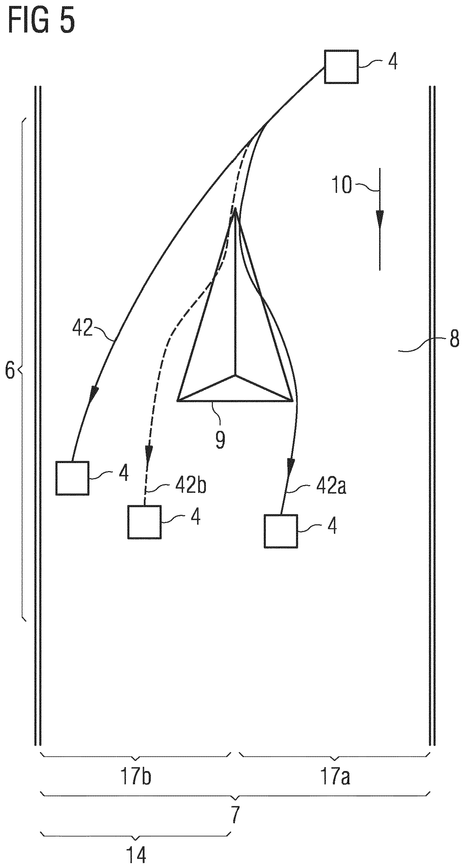

Figur 5 zeigt eine weitere Variante des in Figur 1 dargestellten Ausführungsbeispiels des Rutschabschnitts 6. Die Breitenverteilungsvorrichtung 5 umfasst eine im oberen Bereich des Rutschabschnitts 6 angeordnete Verteilungsvorrichtung 9. Die Verteilungsvorrichtung 9 ermöglicht eine Verteilung der Güter 4 auf die rechte Seite 17a und/ oder linke Seite 17b des Rutschabschnitts 6. Leichte Variationen in Ausmass und Grösse der Güter 4 führen zu einer leichten Wegvariation, so dass die Güter auf ihrem Weg 42 entlang dem Rutschabschnitt 6 leicht auf die Verteilungsvorrichtung 9 treffen können. Dadurch legen die Güter 4 einen von einer Seite der Verteilungsvorrichtung 9, die auf der linken Seite 17b respektive rechten Seite 17a des Rutschabschnitts 6 liegt, beeinflussten Weg 42b respektive 42a zurück. Die Verteilungsvorrichtung 9 kann beispielsweise ein kegelförmiges Teil oder eine Pyramide mit dreieckiger Grundfläche sein, dessen Spitze im oberen Bereich der Rutschfläche 8 angeordnet ist. Die Spitze selber befindet sich somit auf gleicher Höhe wie die Rutschfläche 8 selber. Die Verteilungsvorrichtung 9 erhebt sich entlang der Fallrichtung 10 immer weiter aus der Rutschfläche 8.

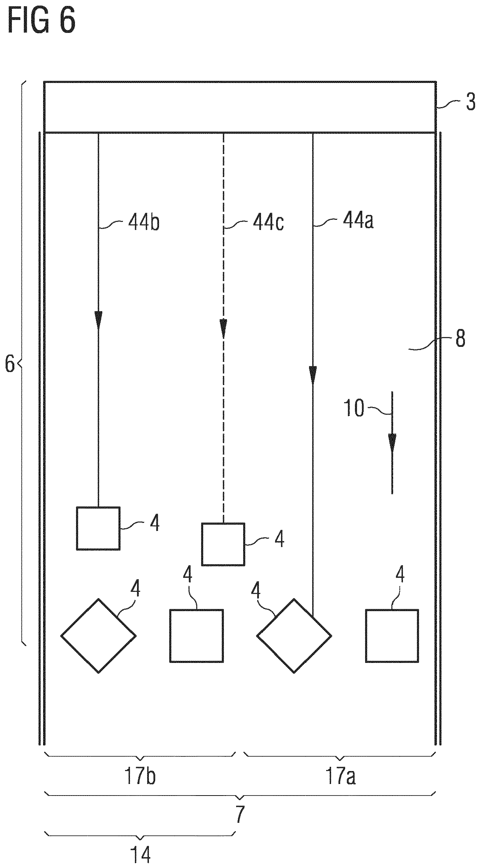

Figur 6 zeigt eine weitere Variante des in Figur 1 dargestellten Ausführungsbeispiels des Rutschabschnitts 6. Die Breitenverteilungsvorrichtung 5 umfasst eine Einschleusvorrichtung 3. Die Einschleusvorrichtung 3 bringt die Güter 4 an unterschiedlichen Positionen entlang der Rutschbreite 7 am oberen Ende des Rutschabschnitts 6 ein. Die Güter 4 legen somit nach dem Einschleusen unterschiedliche, im Wesentlichen parallel liegende Wege 44a, 44b, 44c entlang dem Rutschabschnitt 6 zurück. Beim Weg 44a respektive 44b erfolgt das Einschleusen auf die obere rechte Seite 17a respektive linke Seite 17b des Rutschabschnitts 6 und beim Weg 44c in etwa mittig in den oberen Bereich des Rutschabschnitts 6. Die Einschleusvorrichtung 3 kann beispielsweise eine elektronisch gesteuerte Abwurfvorrichtung (Carrier) umfassen, die in der Lage ist, den Abwurfzeitpunkt beliebig zu bestimmen. Eine Steuerung des Abwurfzeitpunktes kann über mindestens eine in der Einschleusvorrichtung 3 integrierte Lichtschranke geregelt werden, die den Abwurfzeitpunkt ausgehend von der Position der Güter 4 bestimmt, oder über eine einfache Bestimmung des Abwurfzeitpunktes nach einer vorgebbaren Zeitverzögerung. Somit können die Güter 4 relativ gleichmässig entlang der Rutschbreite 7 verteilt werden.

Alle in den Figuren 2 bis 6 beschriebenen Varianten des in Figur 1 dargestellen Ausführungsbeispiels des Rutschabschnitts 6 sind in einer Transportrutsche 1 kombinierbar.

Das mindestens eine Antriebsmittel 20 ist auf mehrere Segmente, die entlang der Rutschbreite 7 versetzt angeordnet sind, verteilt. Daraus ergibt sich konstruktionsbedingt, dass das mindestens eine Antriebsmittel 20 nicht die gesamte Fläche des Rutschabschnitts 6 überspannt. Darüber hinaus ist das mindestens eine Antriebsmittel 20 auf mehrere Segmente, die entlang der Fallrichtung 10 angeordnet sind, verteilt. Eine versetzte Anordnung alleinig entlang der Fallrichtung 10 ist in Figur 2 dargestellt. Eine versetzte Anordnung sowohl entlang der Fallrichtung 10, als auch entlang der Rutschbreite 7 ist in den Figuren 3 und 4 dargestellt. Eine versetzte Anordnung der Segmente des Antriebsmittels 20, kombiniert mit unterschiedlichen Transportrichtungen 21 der Segmente des mindestens einen Antriebsmittels 20 ermöglicht ist in Figur 4 dargestellt. Die Segmente können unterschiedliche Abstände zueinander aufweisen. Eine vorteilhafte Ausführungsform umfasst entlang der Fallrichtung 10 zunehmende Abstände der Segmente. In Fallrichtung zunehmende Abstände der Segmente von der Ansammlungsseite 14 bewirken eine stärkere Ablenkung grosser Güter 4a weg von der Ansammlungsseite 14.

Das Antriebsmittel 20 kann die Güter 4 aktiv und/ oder über Schwerkraftförderung transportieren. Eine aktive Ansteuerung des Antriebsmittels 20 kann eine Ansteuerelektronik erforderlich machen und erfordert einen Ansteuermotor, ermöglicht jedoch auch - falls erforderlich - eine Erhöhung der Transportgeschwindigkeit der Güter 4. Ein Transport der Güter 4 über Schwerkraftförderung nutzt das Gewicht der Güter 4 zum Antreiben des Antriebsmittels 4 und somit zum Transport aus. Im Fall einer Rollenbahn umfasst die Schwerkraftförderung beispielsweise Schwerkraftrollen. Die Schwerkraftrollen können Bremsrollen, die die Ablaufgeschwindigkeit konstant halten, umfassen. Eine zusätzliche Bremsfunktion kann durch verschiedene Techniken in die Rollenbahn integriert werden, die beispielsweise einen Bremsmotor, eine Friktionsbremse oder eine Zentrifugalkupplung umfassen.

Das Antriebsmittel 20 umfasst eine Rollenbahn und/ oder ein Förderband. Das Antriebsmittel 20 ist vorzugsweise so beschaffen, dass eine gute Kraftübertragung auf die Güter 4 erfolgt, damit eine effiziente Ablenkung in Transportrichtung 21 des Antriebsmittels 20 auf die Güter 4 erfolgen kann. Zu diesem Zweck kann das Antriebsmittel 20 beschichtet und/ oder gummiert und/ oder so beschaffen sein, dass es mit Kunststoffen oder anderen Materialen überziehbar ist.

Es wird ein Verfahren zum Speichern von Gütern 4 auf einer Transportrutsche 1 beschrieben. Die Transportrutsche 1 umfasst einen Rutschabschnitt 6, der eine geneigte Rutschfläche 8 aufweist mit einer Fallrichtung 10 entlang der Rutschfläche 8. Die Transportrutsche weist eine Rutschbreite 7 auf. Der Rutschabschnitt 6 umfasst eine Breitenverteilungsvorrichtung 5, mit der die Güter 4 über zumindest einen Teil der Rutschbreite 7 verteilbar sind. Zunächst erfolgt ein Einschleusen der Güter 4 in einem Einschleusbereich des Rutschabschnitts 4. Ohne einen Einfluss der Breitenverteilungsvorrichtung 5 akkumulieren sich die Güter auf einer Ansammlungsseite 14 des Rutschabschnitts 6. Anschliessend erfolgt eine Wechselwirkung der Güter 4 und der Breitenverteilungsvorrichtung 5. Dadurch erfolgt eine bessere Verteilung der Güter 4 auf der gesamten Transportrutsche 1.

Die Güter 4 weisen vor dem Einschleusen eine nicht mit der Fallrichtung übereinstimmende Bewegungsrichtung 12 auf. Dadurch werden die Wege der Güter 4 entlang dem Rutschabschnitt 6 sowohl von der Bewegungsrichtung 12, als auch von der Fallrichtung 10 beeinflusst.

Eine Ansammlung der Güter 4 auf der Ansammlungsseite 14 erfolgt aufgrund ihrer Trägheit und ihrer Bewegungsrichtung 12 vor dem Einschleusen. Somit können die Wege der Güter 4 entlang dem Rutschabschnitt 6 sowohl von ihrer Trägheit, als auch von ihrer Bewegungsrichtung 12 vor dem Einschleusen beeinflusst werden.

Eine Querneigung der Rutschfläche 8 kann die Güter 4 ebenfalls entlang der Rutschbreite 7 verteilen und somit eine verbesserte Breitenverteilung erzielen. Mit der vorliegenden Erfindung kann dies jedoch auch ohne Querneigung erzielt werden. Darüber hinaus ist die Breitenverteilung der Güter 4 in Abhängigkeit von ihren Abmessungen, Gewicht und/ oder Geschwindigkeit beeinflussbar.

Einige Ausführungsbeispiele der Erfindung nutzen den Umstand, dass in einer schiefen Ebene Güter 4 durch ihr Eigengewicht Schwerkraftrollen bewegen können. Aufgrund der Reibung zwischen Rollenbahn und Gut 4 wird die weitere Bewegung der Güter 4 durch die Rollen abgelenkt. Werden diese Rollen in einer Transportrutsche 1 nun mit einem Anstellwinkel 22 eingebaut so dass die Güter 4 von der Ansammlungsseite 14 weggeführt werden, bildet sich eine deutlich bessere Breitenverteilung aus. Entscheidend ist, dass die Rollenbahn so geneigt beziehungsweise der Anstellwinkel 22 so eingestellt ist, dass die Güter 4 durch die Schwerkraft von der Ansammlungsseite 14 weggezogen werden.

Gemäss einem Ausführungsbeispiel wird die Breitenverteilung der Güter 4 auf der Transportrutsche 1 durch eine einfache konstruktive Massnahme erhöht. Ein Einbau von Antriebsmitteln 20 in die Rutschfläche 8, die nicht den gesamten Rutschabschnitt 6 überspannen und die einen Anstellwinkel 21 aufweisen, sorgt dafür, dass die Güter 4 aufgrund ihrer Gewichtskraft von der Ansammlungsseite 14 weggezogen werden. Konstruktionsbedingt sind Anstellwinkel 22 zwischen 5° und 45° bevorzugte Ausführungsformen, andere Anstellwinkel 22 können jedoch auch realisiert werden.

Die Transportrutsche 1 kann beispielsweise in Paketsortieranlagen von Logistikunternehmen und in Gepäcksortieranlagen von Flüghäfen zum Einsatz kommen. Demzufolge umfasst die Sortieranlage 2 unterschiedliche Ausführungsformen, wie beispielsweise Crossbelt-, Tilttray-, Schuh-, Pusher- oder Pop-Up-Sorter.

Gemäss einem Ausführungsbeispiel kann die Speicherkapazität der Transportrutsche 1 erhöht werden, ohne ihren Flächenbedarf zu erhöhen.

### Bezugszeichenliste

- 1: Transportrutsche
- 2: Sortieranlage
- 3: Einschleusvorrichtung
- 4: Gut
- 4a: grosses Gut
- 5: Breitenverteilungsvorrichtung
- 6: Rutschabschnitt
- 7: Rutschbreite
- 8: Rutschfläche
- 9: Verteilungsvorrichtung
- 10: Fallrichtung
- 12: Bewegungsrichtung
- 14: Ansammlungsseite
- 17a: rechte Seite des Rutschabschnitts 6
- 17b: linke Seite des Rutschabschnitts 6
- 20: Antriebsmittel
- 20b: zweites Antriebsmittel
- 20c: drittes Antriebsmittel
- 20d: viertes Antriebsmittel
- 21: Transportrichtung des Antriebsmittels 20
- 21b: Transportrichtung des zweiten Antriebsmittels 20b
- 21c: Transportrichtung des dritten Antriebsmittels 20c
- 21d: Transportrichtung des vierten Antriebsmittels 20d
- 22: Anstellwinkel des Antriebsmittels 20
- 22b: Anstellwinkel des zweiten Antriebsmittels 20b
- 22c: Anstellwinkel des dritten Antriebsmittels 20c
- 22d: Anstellwinkel des vierten Antriebsmittels 20d
- 40: von den Antriebsmitteln 20 und 20b beeinflusster Weg
- 40a: von den Antriebsmitteln 20 und 20b beeinflusster Weg des grossen Guts 4a
- 41: von dem Antriebsmittel 20 beeinflusster Weg
- 42: von der Verteilungsvorrichtung 9 unbeeinflusster Weg
- 42a: von einer Seite der Verteilungsvorrichtung 9, die auf der rechten Seite 17a des Rutschabschnitts 6 liegt, beeinflusster Weg
- 42b: von einer Seite der Verteilungsvorrichtung 9, die auf der linken Seite 17b des Rutschabschnitts 6 liegt, beeinflusster Weg
- 44a: Weg nach Einschleusen auf die obere rechte Seite 17a des Rutschabschnitts 6
- 44b: Weg nach Einschleusen auf die der obere linke Seite 17b des Rutschabschnitts 6
- 44c: Weg nach Einschleusen in etwa mittig in den oberen Bereich des Rutschabschnitts 6
- 45: hypothetischer Weg unbeeinflusst von dem mindestens einem Antriebsmittel 20

## Patentansprüche

1. Transportrutsche (1) geeignet zur Verwendung als Speicher von Gütern (4), insbesondere von Paketen und Gepäckstücken; umfassend mindestens einen Rutschabschnitt (6), der eine geneigte Rutschfläche (8) aufweist mit einer Fallrichtung (10) entlang der Rutschfläche (8), wobei die Transportrutsche (1) eine Rutschbreite (7) aufweist; wobei
der Rutschabschnitt (6) eine Breitenverteilungsvorrichtung (5) umfasst, mit der die Güter (4) über zumindest einen Teil der Rutschbreite (7) verteilbar sind und die somit eine verbesserte Ausnutzung der Transportrutsche (1) zur Speicherung der Güter (4) ermöglicht; wobei
die Breitenverteilungsvorrichtung (5) mindestens ein Antriebsmittel (20) zum Transportieren der Güter (4) umfasst, welches so angeordnet ist, dass das Antriebsmittel (20) eine Transportrichtung (21) aufweist, die nicht mit der Fallrichtung (10) übereinstimmt;
**dadurch gekennzeichnet, dass**
das mindestens eine Antriebsmittel (20) auf mehrere Segmente, die entlang der Fallrichtung (10) angeordnet sind, verteilt ist.

2. Transportrutsche (1) nach Anspruch 1, **dadurch gekennzeichnet, dass**
die Breitenverteilungsvorrichtung (5) in die Rutschfläche (8) integriert ist.

3. Transportrutsche (1) nach einem der Ansprüche 1 bis 2, **dadurch gekennzeichnet, dass**
die Breitenverteilungsvorrichtung (5) nicht die gesamte Fläche des Rutschabschnitts (6) überspannt.

4. Transportrutsche (1) nach einem der Ansprüche 1 bis 3, **dadurch gekennzeichnet, dass**
das mindestens eine Antriebsmittel (20) auf mehrere Segmente, die entlang der Rutschbreite (7) versetzt angeordnet sind, verteilt ist.

5. Transportrutsche (1) nach einem der Ansprüche 1 bis 4, **dadurch gekennzeichnet, dass**
mehrere Segmente des mindestens einen Antriebsmittels (20) unterschiedliche Transportrichtungen (21) aufweisen.

6. Transportrutsche (1) nach einem der Ansprüche 1 bis 5, **dadurch gekennzeichnet, dass**
die Breitenverteilungsvorrichtung (5) eine Einschleusvorrichtung (3) umfasst, welche die Güter (4) an unterschiedlichen Positionen entlang der Rutschbreite (7) am oberen Ende des Rutschabschnitts (6) einbringt.

7. Transportrutsche (1) nach einem der Ansprüche 1 bis 6, **dadurch gekennzeichnet, dass**
die Breitenverteilungsvorrichtung (5) eine im oberen Bereich des Rutschabschnitts (6) angeordnete Verteilungsvorrichtung (9) umfasst, die eine Verteilung der Güter (4) auf die rechte Seite (17a) und/ oder linke Seite (17b) des Rutschabschnitts (6) ermöglicht.

8. Transportrutsche (1) nach einem der Ansprüche 1 bis 7, **dadurch gekennzeichnet, dass**
das Antriebsmittel (20) ausgestaltet ist, die Güter (4) aktiv und/ oder über Schwerkraftförderung zu transportieren.

9. Transportrutsche (1) nach einem der Ansprüche 1 bis 8, **dadurch gekennzeichnet, dass**
das Antriebsmittel (20) eine Rollenbahn und/ oder ein Förderband umfasst.

10. Verfahren zum Speichern von Gütern (4) auf einer Transportrutsche (1), welche einen Rutschabschnitt (6), der eine geneigte Rutschfläche (8) aufweist mit einer Fallrichtung (10) entlang der Rutschfläche (8), umfasst, wobei die Transportrutsche (1) eine Rutschbreite (7) aufweist und **dadurch gekennzeichnet ist, dass** der Rutschabschnitt (6) eine Breitenverteilungsvorrichtung (5) umfasst, mit der die Güter (4) über zumindest einen Teil der Rutschbreite (7) verteilbar sind, umfassend die Verfahrensschritte:
a) Einschleusen der Güter (4) in einem Einschleusbereich des Rutschabschnitts (4), wobei sich die Güter (4) ohne einen Einfluss der Breitenverteilungsvorrichtung (5) auf einer Ansammlungsseite (14) des Rutschabschnitts (6) akkumulieren würden;
b) Verteilen der Güter mittels einer Wechselwirkung der Güter (4) mit der Breitenverteilungsvorrichtung (5);
wobei,
die Breitenverteilungsvorrichtung (5) mindestens ein Antriebsmittel (20) zum Transportieren der Güter (4) umfasst, welches so angeordnet ist, dass das Antriebsmittel (20) eine Transportrichtung (21) aufweist, die nicht mit der Fallrichtung (10) übereinstimmt,
**dadurch gekennzeichnet**, das mindestens eine Antriebsmittel (20) auf mehrere Segmente, die entlang der Fallrichtung (10) angeordnet sind, verteilt ist,
wobei
die Güter bei einem Passieren des Rutschabschnitts mehrfach abgelenkt werden.

11. Verfahren nach Anspruch 10, **dadurch gekennzeichnet, dass** die Güter (4) vor dem Einschleusen eine nicht mit der Fallrichtung (10) übereinstimmende Bewegungsrichtung (12) aufweisen.

12. Verfahren nach einem der Ansprüche 10 bis 11, **dadurch gekennzeichnet, dass**
eine Ansammlung der Güter (4) auf der Ansammlungsseite (14) aufgrund ihrer Trägheit und ihrer Bewegungsrichtung (12) vor dem Einschleusen erfolgt.

## Claims

1. Transport chute (1) suitable for use as a store of goods (4), in particular of packages and pieces of luggage; comprising at least one chute section (6) having a sloping chute surface (8) with a falling direction (10) along the chute surface (8), wherein the transport chute (1) has a chute width (7); wherein
the chute section (6) comprises a width distribution device (5) with which the goods (4) can be distributed over at least a part of the chute width (7) and which thus enables an improved utilization of the transport chute (1) for storing the goods (4); wherein
the width distribution device (5) comprises at least one drive means (20) for transporting the goods (4), which is arranged in such a way that the drive means (20) has a transport direction (21) which does not coincide with the falling direction (10)
**characterized in that**
the at least one drive means (20) is distributed over several segments arranged along the falling direction (10).

2. Transport chute (1) according to claim 1, **characterized in that**
the width distribution device (5) is integrated into the chute surface (8).

3. Transport chute (1) according to one of claims 1 to 2, **characterized in that**
the width distribution device (5) does not span the entire surface of the chute section (6).

4. Transport chute (1) according to one of claims 1 to 3, **characterized in that**
the at least one drive means (20) is distributed over a plurality of segments which are arranged offset along the chute width (7).

5. Transport chute (1) according to one of the claims 1 to 4, **characterized in that**
several segments of the at least one drive means (20) have different transport directions (21).

6. Transport chute (1) according to one of the claims 1 to 5, **characterized in that**
the width distribution device (5) comprises an insertion device (3) which inserts the goods (4) at different positions along the chute width (7) at the upper end of the chute section (6).

7. Transport chute (1) according to one of the claims 1 to 6, **characterized in that**
the width distribution device (5) comprises a distribution device (9) arranged in the upper region of the chute section (6) that enables distribution of the goods (4) to the right side (17a) and/or left side (17b) of the chute section (6).

8. Transport chute (1) according to one of the claims 1 to 7, **characterized in that**
the drive means (20) is designed to transport the goods (4) actively and/or via gravity conveying.

9. Transport chute (1) according to one of claims 1 to 8, **characterized in that**
the drive means (20) comprises a roller conveyor and/or a conveyor belt.

10. Method for storing goods (4) on a transport chute (1) comprising a chute section (6) having a sloping chute surface (8) with a falling direction (10) along the chute surface (8), wherein the transport chute (1) has a chute width (7) and is **characterized in that** the chute section (6) comprises a width distribution device (5) with which the goods (4) can be distributed over at least a part of the chute width (7), comprising the method steps:
a) introducing the goods (4) in an insertion region of the chute section (4), wherein the goods (4) would accumulate on an accumulation side (14) of the chute section (6) without an influence of the width distribution device (5);
b) distributing the goods by means of an interaction of the goods (4) with the width distribution device (5);
wherein the width distribution device (5) comprises at least one drive means (20) for transporting the goods (4), which is arranged such that the drive means (20) has a transport direction (21) which does not coincide with the falling direction (10),
**characterized in that** the at least one drive means (20) is distributed over several segments arranged along the falling direction (10),
wherein the goods are deflected several times when passing the chute section.

11. Method according to claim 10, **characterized in that** the goods (4) have a direction of movement (12) which does not correspond to the falling direction (10) prior to the insertion.

12. Method according to one of claims 10 to 11, **characterized in that**
an accumulation of the goods (4) on the accumulation side (14) takes place due to their inertia and their direction of movement (12) prior to the insertion.

## Revendications

1. Toboggan de transport (1) adapté pour être utilisé comme dispositif de stockage de marchandises (4), en particulier de paquets et de bagages ; comprenant au moins une section de glissement (6) qui présente une surface de glissement inclinée (8) avec une direction de chute (10) le long de la surface de glissement (8), le toboggan de transport (1) présentant une largeur de glissement (7) ;
dans lequel
la section de glissement (6) comprend un dispositif de répartition sur la largeur (5) permettant de répartir les marchandises (4) sur au moins une partie de la largeur de glissement (7) et qui permet ainsi une meilleure exploitation du toboggan de transport (1) pour le stockage des marchandises (4) ;
le dispositif de répartition sur la largeur (5) comprend au moins un moyen d'entraînement (20) pour transporter les marchandises (4), qui est disposé de telle sorte que le moyen d'entraînement (20) présente une direction de transport (21) qui ne coïncide pas avec la direction de chute (10) ;
**caractérisé en ce que**
ledit au moins un moyen d'entraînement (20) est réparti sur plusieurs segments disposés le long de la direction de chute (10).

2. Toboggan de transport (1) selon la revendication 1,
**caractérisé en ce que**
le dispositif de répartition sur la largeur (5) est intégré dans la surface de glissement (8).

3. Toboggan de transport (1) selon l'une des revendications 1 à 2,
**caractérisé en ce que**
le dispositif de répartition sur la largeur (5) ne couvre pas toute la surface de la section de glissement (6).

4. Toboggan de transport (1) selon l'une des revendications 1 à 3,
**caractérisé en ce que**
ledit au moins un moyen d'entraînement (20) est réparti sur plusieurs segments décalés le long de la largeur de glissement (7).

5. Toboggan de transport (1) selon l'une des revendications 1 à 4,
**caractérisé en ce que**
plusieurs segments dudit au moins un moyen d'entraînement (20) présentent des directions de transport (21) différentes.

6. Toboggan de transport (1) selon l'une des revendications 1 à 5,
**caractérisé en ce que**
le dispositif de répartition sur la largeur (5) comprend un dispositif d'introduction (3) qui introduit les marchandises (4) à l'extrémité supérieure de la section de glissement (6) à différentes positions le long de la largeur de glissement (7).

7. Toboggan de transport (1) selon l'une des revendications 1 à 6,
**caractérisé en ce que**
le dispositif de répartition sur la largeur (5) comprend un dispositif de répartition (9) disposé dans la zone supérieure de la section de glissement (6), lequel permet une répartition des marchandises (4) sur le côté droit (17a) et/ou sur le côté gauche (17b) de la section de glissement (6).

8. Toboggan de transport (1) selon l'une des revendications 1 à 7,
**caractérisé en ce que**
le moyen d'entraînement (20) est conçu pour transporter les marchandises (4) de façon active et/ou par voie gravitaire.

9. Toboggan de transport (1) selon l'une des revendications 1 à 8,
**caractérisé en ce que**
le moyen d'entraînement (20) comprend un convoyeur à rouleaux et/ou une bande transporteuse.

10. Procédé de stockage de marchandises (4) sur un toboggan de transport (1) qui comprend une section de glissement (6) présentant une surface de glissement inclinée (8) avec une direction de chute (10) le long de la surface de glissement (8), le toboggan de transport (1) présentant une largeur de glissement (7) et étant **caractérisé en ce que** la section de glissement (6) comprend un dispositif de répartition sur la largeur (5) permettant de répartir les marchandises (4) sur au moins une partie de la largeur de glissement (7), comprenant les étapes de procédé consistant à :
a) introduire les marchandises (4) dans une zone d'introduction de la section de glissement (4), sachant que sans l'influence du dispositif de répartition sur la largeur (5), les marchandises (4) s'accumuleraient sur un côté d'accumulation (14) de la section de glissement (6) ;
b) répartir les marchandises au moyen d'une interaction des marchandises (4) avec le dispositif de répartition sur la largeur (5) ;
le dispositif de répartition sur la largeur (5) comprenant au moins un moyen d'entraînement (20) pour transporter les marchandises (4), qui est disposé de telle sorte que le moyen d'entraînement (20) présente une direction de transport (21) qui ne coïncide pas avec la direction de chute (10) ;
**caractérisé en ce que**
ledit au moins un moyen d'entraînement (20) est réparti sur plusieurs segments disposés le long de la direction de chute (10),
les marchandises (4) étant déviées plusieurs fois lorsqu'elles franchissent la section de glissement.

11. Procédé selon la revendication 10,
**caractérisé en ce que**
avant l'introduction, les marchandises (4) présentent une direction de mouvement (12) qui ne coïncide pas avec la direction de chute (10).

12. Procédé selon l'une des revendications 10 à 11,
**caractérisé en ce que**
avant l'introduction, une accumulation des marchandises (4) sur le côté d'accumulation (14) se produit en raison de leur inertie et de leur direction de mouvement (12).
